# EUROPEAN PATENT SPECIFICATION

(11) **EP 4 068 746 B1**
(45) Date of publication and mention of the grant of the patent: **19.08.2026**
(21) Application number: 20892156.9
(22) Date of filing: 12.11.2020
(51) Int. Cl.: G01S 7/481, G01S 17/894, G02B 3/00, H04N 23/56

(54) **DISTANCE MEASURING CAMERA APPARATUS**
DISTANZMESSKAMERAGERÄT
APPAREIL CAMÉRA DE MESURE DE DISTANCE

(30) Priority: 25.11.2019 KR 20190152082
(43) Date of publication of application: 05.10.2022
(73) Proprietor: LG Innotek Co., Ltd., Seoul 07796 (KR)
(72) Inventor: PARK, Gwui Youn, Seoul 07796 (KR); YU, Dong Hyun, Seoul 07796 (KR)
(74) Representative: DREISS Patentanwälte PartG mbB
(86) International application number: PCT/KR2020/015860
(87) International publication number: WO 2021/107465

(56) References cited:
- WO-A1-2018/146889
- JP-A- 2016 042 191
- JP-A- 2017 207 695
- KR-A- 20120 069 833
- KR-A- 20140 103 817
- KR-A- 20150 065 473
- US-A- 5 377 287
- US-A1- 2010 053 565

## Description

### TECHNICAL FIELD

Embodiments relate to a distance measuring camera apparatus.

### BACKGROUND ART

WO 2018/146889 A1 discloses a distance measuring camera apparatus according to the preamble of claim 1. US 5 377 287 A discloses a fibre optic corporate power divider for use in fibre optic systems. The optical divider includes a dielectric lens for converting incoming optical energy from a divergent spherical wave to a plane wave. A micro-lens array is in optical alignment with the dielectric lens functions to partition and focus the plane wave to provide a coherent phase optical dot pattern. US 2010/053565 A1 discloses a laser illuminating device, which includes a laser light source, a first lens including a plurality of microlenses. Three-dimentional (3D) contents are applied in many fields such as education, manufacturing, and autonomous driving as well as games and culture. In order to acquire 3D contents, depth information (depth map) is required. The depth information is information indicating a distance in space, and indicates perspective information of another point with respect to one point of a two-dimensional (2D) image.

Recently, time of flight (ToF) is attracting attention as a method of acquiring the depth information. According to the TOF method, a distance to an object is calculated by measuring the flight time, that is, the time it takes for the emitted light to reflect and arrive. The biggest advantage of the ToF method is that it provides distance information about 3D space quickly in real time. In addition, the user can obtain accurate distance information without applying a separate algorithm or hardware correction. Also, accurate depth information can be obtained even by measuring a very close subject or measuring a moving subject.

However, unlike a camera module that does not use a separate light source, the TOF camera has a structure that outputs light by a light source, so safety problems may be caused. In particular, when light with high light intensity is irradiated to light-sensitive parts of the body, such as eyes, it can lead to serious injuries. To prevent such accidents, the ToF camera module is manufactured in accordance with strict safety regulations. Therefore, there is a need for a camera module capable of solving these problems.

### DISCLOSURE

### TECHNICAL PROBLEM

Embodiments provide a ToF distance measuring camera apparatus having a high degree of safety.

The problem to be solved in embodiments is not limited thereto, and the purpose or effect that can be understood from the technical solution or embodiments described below will also be included.

### TECHNICAL SOLUTION

An aspect of the invention is provided by the distance measuring camera apparatus according to claim 1.

Another aspect of the invention is provided by the distance measuring camera apparatus according to claim 6.

Advantageous embodiments are provided by the dependent claims.

### ADVANTAGEOUS EFFECTS

According to embodiments, it is possible to implement a ToF distance measuring camera apparatus that provides a high degree of safety.

The various and beneficial advantages and effects of the present invention are not limited to the above, and will be more easily understood from the description of specific embodiments of the present invention.

### DESCRIPTION OF DRAWINGS

FIG. 1 is a block diagram of a distance measuring camera apparatus according to an embodiment of the present invention.
FIG. 2 is a schematic diagram of a light emitter according to an embodiment of the present invention.
FIG. 3 is a diagram for explaining the concentration of luminous flux of a diffusion member according to an embodiment of the present invention.
FIG. 4 is a diagram illustrating a diffusion member according to an embodiment of the present invention.
FIG. 5 is a diagram for explaining a diffusion member according to an embodiment of the present invention.
FIG. 6 is a diagram for explaining a distance between a light source and a diffusion member in setting of first and second regions according to an embodiment of the present invention.
FIG. 7 is a diagram for explaining a divergence angle of a light emitting device according to an embodiment of the present invention.
FIG. 8 is a diagram illustrating a diffusion member according to an embodiment of the present invention.
FIG. 9 is a diagram illustrating an example of the concentration of luminous flux according to FIG. 8.
FIG. 10 is a diagram illustrating a diffusion member according to an embodiment of the present invention.
FIG. 11 is a diagram illustrating an example of the concentration of luminous flux according to an embodiment of the present invention.
FIGS. 12 and 13 is a diagram illustrating a simulation result according to an embodiment of the present invention.
FIG. 13 is a diagram illustrating a simulation result in a diffusion member according to an embodiment of the present invention.
FIG. 14 is an exploded diagram of a distance measuring camera apparatus according to an embodiment of the present invention.

### BEST MODE

Hereinafter, various embodiments of the present invention will be described in detail with reference to the accompanying drawings.

In addition, terms (including technical and scientific terms) used in embodiments of the present invention may be interpreted as the meaning generally understood by those of ordinary skill in the art to which the present invention belongs, unless specifically defined and described explicitly. Terms commonly used, such as terms defined in the dictionary, may be interpreted in consideration of the contextual meaning of the related art.

In addition, the terms used in embodiments of the present invention are for describing the embodiments and are not intended to limit the present invention.

In the description, a singular form may also include a plural form unless otherwise specified in the phrase. When it is described as "at least one (or one or more) of A, B, and C", it may include one or more of all possible combinations of A, B, and C.

Also, in describing components of an embodiment of the present invention, terms such as first, second, A, B, (a), (b), etc. may be used.

These terms are only for distinguishing one component from other components, and are not limited to the essence, order, or sequence of the component by the term.

In addition, when it is described that one component is 'connected' or 'coupled' to another component, this not only includes a case where one component is directly connected or coupled to another component, but also includes a case where one component is connected or coupled to another component through still another component between both components.

In addition, when it is described that one component is formed or disposed "on (above) or under (below)" of another component, this not only includes a case where two components are in direct contact with each other, but also includes a case where one or more other components are formed or disposed between two components. Besides, when expressed as "on (above) or under (below)", the meaning of not only an upper direction but also a lower direction based on one component may be included.

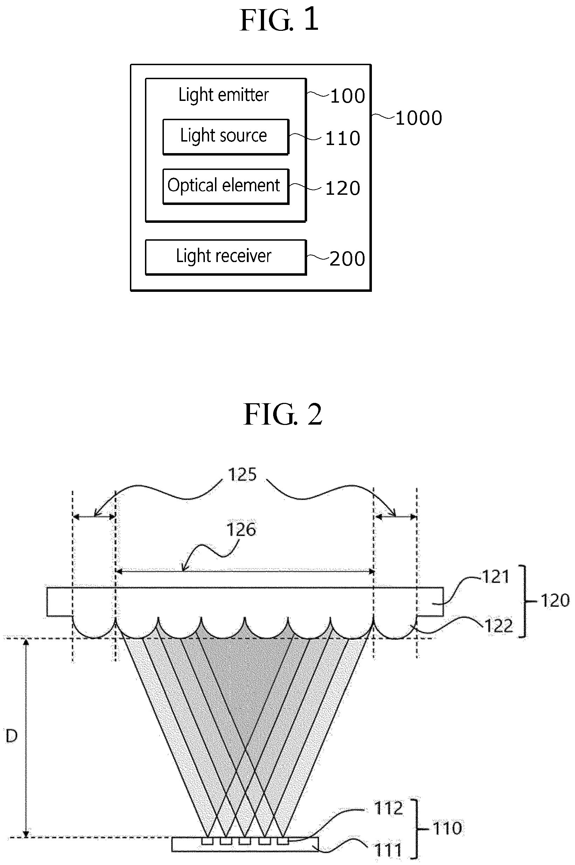

FIG. 1 is a block diagram of a distance measuring camera apparatus according to an embodiment of the present invention.

The distance measuring camera apparatus 1000 according to an embodiment of the present invention may refer to a camera or a camera apparatus that extracts depth information by using a time of flight (ToF) function. Therefore, the distance measuring camera apparatus 1000 may be used interchangeably with a ToF distance measuring camera apparatus, a ToF camera apparatus, a ToF camera module, and a ToF camera.

Referring to FIG. 1, the distance measuring camera apparatus 1000 according to an embodiment of the present invention includes a light emitter 100 and a light receiver 200.

The light emitter 100 may be a unit that generates an optical signal and then outputs the generated optical signal to an object. To this end, the light emitter 100 includes a component capable of generating light, which is a light emitting device, and a component capable of modulating light. The optical signal may be in the form of a pulse wave or a continuous wave. The continuous wave may be in the form of a sinusoid wave or a square wave.

Referring to FIG. 1, the light emitter 100 includes a light source 110 and a diffusion member 120. The light source 110 may generate light. The light source 110 may output light. The light source 110 may irradiate light. The light generated by the light source 110 may be infrared rays having a wavelength of 770 to 3000 nm. Alternatively, the light generated by the light source 110 may be visible light having a wavelength of 380 to 770 nm. The diffusion member 120 may receive the light outputted from the light source 110, diffract the received light, and output the diffracted light. The diffusion member 120 may collect light and convert it into parallel light. The diffusion member 120 may be a micro lens array (MLA).

The light receiver 200 may detect light reflected by an object. The light receiver 200 may detect an optical signal reflected by the object. In this case, the detected optical signal may be the optical signal outputted by the light emitter 100 and reflected by the object.

The light receiver 200 may include a lens assembly, a filter, and a sensor to detect an optical signal. The optical signal reflected by an object may pass through the lens assembly. An optical axis of the lens assembly may be aligned with an optical axis of the sensor. The filter may be disposed between the lens assembly and the sensor. The filter may be disposed on an optical path between the object and the sensor. The filter may filter light having a predetermined wavelength range. The filter may transmit a specific wavelength band of light. The filter may pass light of a specific wavelength. For example, the filter may pass light in the infrared band and block light outside the infrared band. The sensor senses light. The sensor receives an optical signal. The sensor is an image sensor that senses an optical signal. The sensor may detect an optical signal and output it as an electrical signal. The sensor detects light having a wavelength corresponding to the wavelength of light outputted from the light emitting device. For example, the sensor may detect light in an infrared band.

The light receiver 200 and the light emitter 100 may be arranged side by side. The light receiver 200 may be disposed next to the light emitter 100. The light receiver 200 may be disposed in the same direction as the light emitter 100.

FIG. 2 is a schematic diagram of a light emitter according to an embodiment of the present invention.

Referring to FIG. 2, the light emitter 100 according to an embodiment of the present invention includes the light source 110 and the diffusion member 120.

According to an embodiment of the present invention, the light source 110 may include a plurality of light emitting devices 112. Specifically, the light source 110 may be implemented in the form of an array in which the plurality of light emitting devices 112 are arranged on a substrate 111 in accordance with a predetermined rule. The substrate 111 has a first surface and a second surface. A plurality of light apertures may be formed on the first surface of the substrate 111, and the plurality of diffusion members 120 is disposed on the substrate 111 to correspond to the plurality of light apertures. The light source 110 outputs light through the light aperture, and the light may be outputted at a predetermined divergence angle. The plurality of light emitting devices 112 may be vertical-cavity surface-emitting lasers (VCSELs).

The diffusion member 120 is divided into a body portion 121 and a plurality of micro lenses 122. Specifically, the diffusion member 120 has a shape in which the plurality of micro lenses 122 are disposed on the body portion 121 in accordance with a predetermined rule. In the diffusion member 120, the body portion 121 and the plurality of micro lenses 122 may be integrally formed with each other. In this case, the body portion 121 and the micro lenses 122 may be formed of the same material. The body portion 121 may have a plate shape.

The diffusion member 120 may have a first surface that receives light from the light source 110 and a second surface that outputs light. The first surface of the diffusion member 120 may include a horizontal surface or a curved surface, and the plurality of micro lenses 122 may be disposed on the second surface of the diffusion member 120.

The plurality of micro lenses 122 have predetermined diameters. The diameters of the plurality of micro lenses 122 may be set so that the maximum value among concentrations of luminous flux of the plurality of micro lenses does not exceed a predetermined value. Here, the concentration of luminous flux may refer to the ratio of luminous flux incident on one micro lens to the total energy outputted by the light source 110.

According to an embodiment of the present invention, the diameters of the plurality of micro lenses 122 are set so that the maximum value among the luminous flux concentrations of the plurality of micro lenses does not exceed a predetermined value, and at the same time, the plurality of micro lenses 122 may be designed to have the same diameter as each other.

According to another embodiment of the present invention, the diffusion member 120 may be divided into a plurality of regions, and the micro lens 122 disposed in a certain region among the plurality of regions is smaller in diameter than the micro lens 122 disposed in another region. Specifically, the second surface of the diffusion member 120 is divided into a first region 125 and a second region 126, and the second region 126 may be divided into a plurality of sub-regions. The first region 125 is disposed to surround the second region 126, the second region 126 is disposed to overlap with the light emitter 100 in the optical axis direction, and the center of the second region 126 may be disposed to overlap with the center of the diffusion member 120. In addition, the second region 126 includes a plurality of sub-regions. For example, the plurality of sub-regions may include two or three sub-regions. The diameter of the micro lens 122 disposed in at least one of the plurality of sub-regions may be smaller than the diameter of the micro lens 122 disposed in the first region 125.

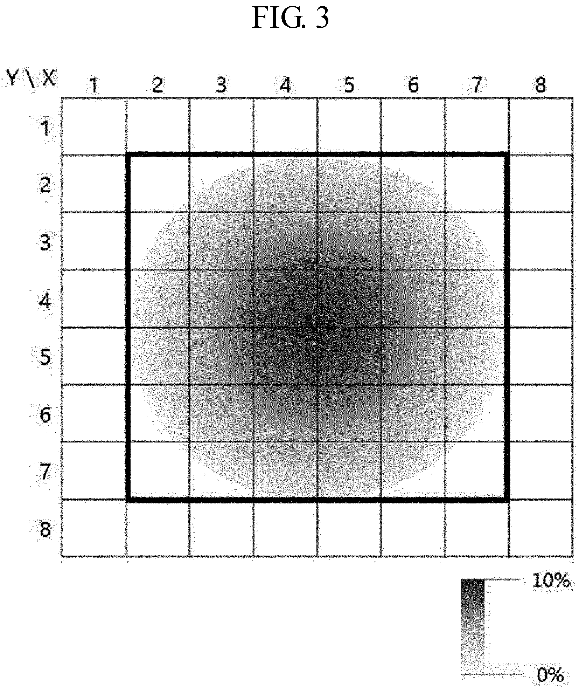

FIG. 3 is a diagram for explaining the concentration of luminous flux of a diffusion member according to an embodiment of the present invention.

FIG. 3 schematically illustrates the diffusion member 120, where each cell refers to one micro lens. FIG. 3 shows a form in which micro lenses each having a diameter of 300 µm are arranged in an 8×8 array. A shade depicted in each cell indicates the ratio of energy concentrated on each micro lens to the total energy outputted by the light source 110. In FIG. 3, it means that the concentrated energy is higher as the micro lens is disposed in a place where the color of the shade is dark.

Referring to FIG. 3, the ratio of the micro lenses showing the luminous flux concentration of about 9% or more with respect to the total energy outputted by the light source is 4/64. The ratio of the micro lenses showing the luminous flux concentration of about 0.5% or more to 9% or less with respect to the total energy outputted by the light source is about 45/64.

Even if the luminous flux concentration is about 9% or more compared to the total energy outputted by the light source, a normal micro lens diffracts and scatters light to output, so the energy concentrated on the micro lens is not transmitted to a subject as it is. However, when the micro lens is damaged, the energy concentrated on the micro lens may be directly transferred to the subject. If the subject is a human, it may cause blindness. Therefore, it is necessary to increase the stability by dispersing the energy concentrated on one micro lens.

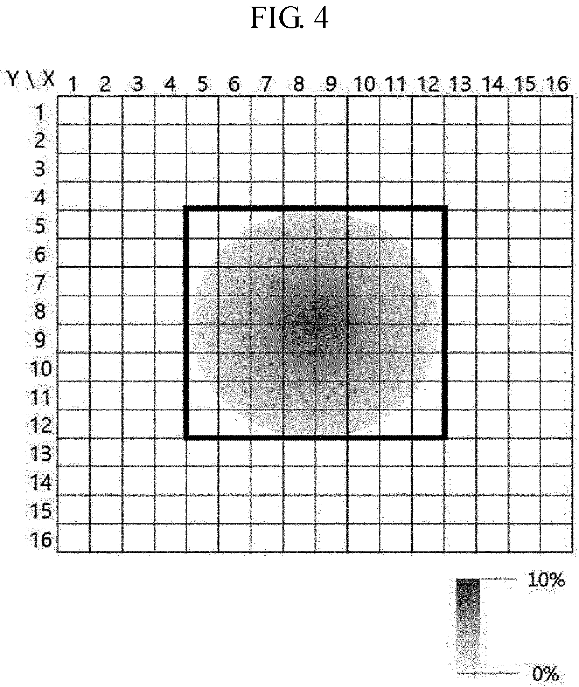

FIG. 4 is a diagram illustrating a diffusion member according to an embodiment of the present invention.

In the diffusion member 120 according to an embodiment of the present invention, the diameters of the plurality of micro lenses may be designed so that the concentration of luminous flux of each of the plurality of micro lenses is dispersed. Specifically, in the diffusion member 120 according to an embodiment of the present invention, the diameter of the micro lens may be set such that the maximum value among the concentrations of luminous flux of the plurality of micro lenses does not exceed a predetermined value. For example, in the diffusion member 120, the diameter of the micro lens may be set such that the maximum value among the concentrations of luminous flux of the plurality of micro lenses does not exceed 2.5%. According to an embodiment, the plurality of micro lenses may be designed to have diameters of 150 µm or less. For example, the diffusion member 120 may be implemented with micro lenses each having a diameter of 100 µm, or may be implemented with micro lenses each having a diameter of 50 µm. According to another embodiment, the plurality of micro lenses may be designed with diameters less than or equal to a value in the range of -10% to 10% with respect to 150 µm. For example, each micro lens of the diffusion member 120 may be designed to have a diameter of 135 µm or less or a diameter of 165 µm or less.

FIG. 4 shows a form in which micro lenses each having a diameter of 150 µm are arranged in a 16×16 array. Referring to FIG. 4, the ratio of the micro lenses showing the luminous flux concentration of about 0.5% or more and 9% or less with respect to the total energy outputted by the light source is about 60/256. In particular, it can be seen that there is no micro lens having a luminous flux concentration of about 9% or more compared to the total energy outputted by the light source. That is, even if the micro lens is partially damaged, the ratio of energy concentrated on one micro lens is low, so there is an advantage in that stability can be improved.

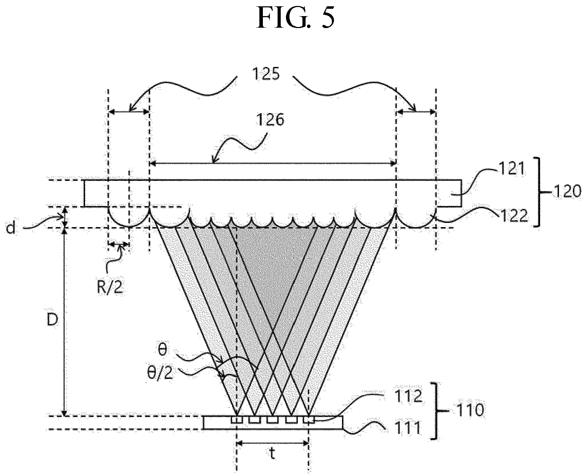

FIG. 5 is a diagram for explaining a diffusion member according to an embodiment of the present invention.

The smaller the diameter of the micro lens is, the less energy is concentrated on one micro lens and the higher the safety, but in this case, the difficulty of the diffusion member 120 manufacturing process is also increased. Therefore, the diffusion member 120 according to an embodiment of the present invention can solve the above problem by setting the diameters of the micro lenses arranged in a plurality of regions distinguished from each other to be different.

The diffusion member 120 according to an embodiment of the present invention includes the first region 125 and the second region 126. A diameter of at least one of the micro lenses 122 disposed in the second region 126 is smaller than a diameter of the micro lenses 122 disposed in the first region 125.

The first region 125 and the second region 126 may be set differently depending on a separation distance between the diffusion member 120 and the light source 110. According to an embodiment of the present invention, the diffusion member 120 may be disposed to be spaced apart from the light source 110. The second region 126 may be set differently depending on a separation distance between the diffusion member 120 and the light source 110. The area of the second region 126 may increase as the separation distance between the diffusion member 120 and the light source 110 increases. Specifically, the area of the second region 126 may increase discretely as the separation distance between the diffusion member 120 and the light source 110 increases. Accordingly, the area of the first region 125 may decrease discretely as the separation distance between the diffusion member 120 and the light source 110 increases.

The second region 126 is set using the following equation.$E = 2 \left(D\times tan\left(\frac{θ}{2}\right)\right) + t$

Here, E denotes a horizontal length or a vertical length of the second region 126, D denotes a separation distance between the diffusion member 120 and the light source 110, θ denotes a divergence angle of the light emitting device 112, and t denotes a maximum separation distance between the centers of the light emitting devices disposed in the same row or column among the plurality of light emitting devices 112 included in the light source 110.

Based on Equation 1 above, the second region 126 may have a minimum area of a quadrangle having a horizontal length E₁ and a vertical length E₂. If the maximum separation distance t corresponding to the row or column of the light emitting device 112 is the same, the second region 126 may have a square shape, and if different, the second region 126 may have a rectangular shape. Since the minimum area of the second region 126 is set as above, the energy of the region where the output of light is concentrated is efficiently dispersed, and the manufacturing efficiency of the diffusion member 120 is improved.

The separation distance between the diffusion member 120 and the light source 110 may be a vertical distance between the first surface of the light source 110 and the first surface of the diffusion member 120. The first surface of the light source 110 refers to one surface on which the light aperture is disposed. The first surface of the diffusion member 120 refers to one surface on which each of the plurality of micro lenses 122 receives light from the light source 110. Specifically, since the plurality of microlenses 122 are arranged in the form of embossing on the first surface of the diffusion member 120, the first surface of the diffusion member 120 may refer to a surface in which points through which the optical axis passes in each of the plurality of micro lenses 122 are connected. Therefore, the separation distance between the diffusion member 120 and the light source 110 may be a vertical distance between the first surface of the light source 110 and a point through which the optical axis passes in the micro lens 122.

The spherical surface of the micro lens 122 may be calculated from Equation 2 below.$z = \frac{{C}_{x} {x}^{2} + {C}_{y} {y}^{2}}{1 + \sqrt{1 - \left[1+{k}_{x}\right] {C}_{x}^{2} {x}^{2} - \left[1+{k}_{y}\right] {C}_{y}^{2} {y}^{2}}}$

Here, Cₓ and C_{y} denote curvatures for the x-axis and y-axis, respectively, and kₓ and k_{y} denote the conic constants for the x-axis and y-axis, respectively.

The values of Cₓ and C_{y} may be proportional to lengths in the x-axis and y-axis directions of the image sensor. That is, when the length in the y-axis direction is greater than the length in the x-axis direction of the image sensor, C_{y} may be greater than Cₓ. For example, when the length ratio in the x-axis and y-axis directions of the image sensor is a:b, the ratio of Cₓ:C_{y} may also be a:b. Specifically, when a:b is 3:4, the ratio of Cₓ:C_{y} is realized as 3:4. That is, the light can be further diffused by increasing the curvature in the y-axis direction, and also the light can be uniformly diffused in the x-axis and y-axis directions.

In addition, if kₓ and k_{y} are designed to have the same value, it can be implemented so that the light diffusion distribution in the x-axis and y-axis directions tends to be the same.

When the coordinate of a point through which the optical axis passes on the spherical surface of the micro lens 122 is (0, 0), the height d of the micro lens 122 may be calculated by applying a half value (R/2) of the diameter of the micro lens 122 to the variables x and y in Equation 2 above.

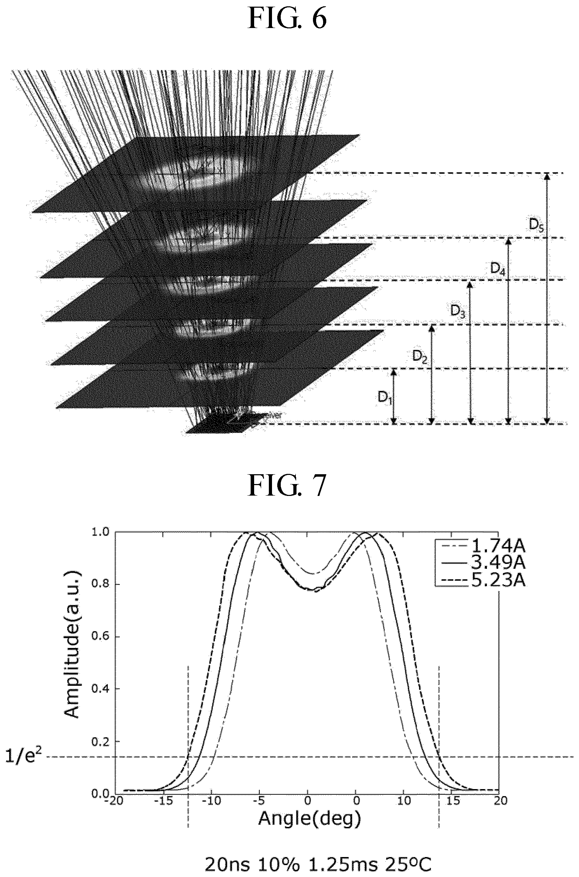

FIG. 6 is a diagram for explaining a distance between a light source and a diffusion member in setting of first and second regions according to an embodiment of the present invention.

FIG. 6 shows the energy distribution of the diffusion members 120 having different separation distances from the light source 110. As shown in FIG. 6, it can be seen that the area where the energy is distributed is wider in case where the separation distance is D₂ than in case of D₁, in case of D₃ than in case of D₂, in case of D₄ than in case of D₃, and in case of D₅ than in case of D₄.

Table 1 below shows the incident amount of energy according to the separation distance between the light source 110 and the diffusion member 120 and the size of the micro lens.

**[Table 1]**

| | 50[µm] | 100[µm] | 150[µm] | 200[µm] | 300[µm] |
|---|---|---|---|---|---|
| 0.5 [mm] | 16 X 16 | 10 X 10 | 8 X 8 | 6 X 6 | 6 X 6 |
| 0.7 [mm] | 16 X 16 | 10 X 10 | 8 X 8 | 6 X 6 | 6 X 6 |
| 0.9 [mm] | 18 X 18 | 10 X 10 | 8 X 8 | 6 X 6 | 6 X 6 |
| 1.1 [mm] | 20 X 20 | 10 X 10 | 8 X 8 | 8 X 8 | 6 X 6 |
| 1.3 [mm] | 20 X 20 | 12 X 12 | 10 X 10 | 8 X 8 | 6 X 6 |
| 1.5 [mm] | 22 X 22 | 12 X 12 | 10 X 10 | 8 X 8 | 6 X 6 |
| 1.7 [mm] | 24 X 24 | 14 X 14 | 10 X 10 | 8 X 8 | 6 X 6 |
| 1.9 [mm] | 26 X 26 | 14 X 14 | 10 X 10 | 8 X 8 | 8 X 8 |
| 2.1 [mm] | 26 X 26 | 14 X 14 | 12 X 12 | 10 X 10 | 8 X 8 |
| 2.3 [mm] | 28 X 28 | 16 X 16 | 12 X 12 | 10 X 10 | 8 X 8 |

Table 1 shows the number of micro lenses into which 99% or more of the total energy outputted by the light source is incident. For example, when the diffusion member 120 is arrayed with micro lenses each having a size of 50 [µm], 99% energy or more is incident on 16X16 micro lenses at a separation distance of 0.5 [mm] between the light source 110 and the diffusion member 120, but 99% energy or more is incident on 28X28 micro lenses at 2.3 [mm]. That is, as the separation distance increases, the number of micro lenses to which 99% or more of energy is incident increases, indicating that the area of the second region is widened. The same applies when micro lenses of sizes 100 [µm], 150 [µm], 200 [µm], or 300 [µm] are arrayed. However, since micro lenses each having a predetermined size are arrayed, the area of the second region may be discretely increased. That is, the area of the second region may be increased for each predetermined separation distance range. On the other hand, Table 1 shows that the size of the area to which 99% or more of the total energy outputted by the light source is incident decreases according to the size of the micro lens. In Table 1, it is assumed that micro lenses of each size are arrayed in a region of the same size. Therefore, a 50 [µm] size micro lens forms the entire diffusion member 120 in an array of 48X48, and a 300 [µm] size micro lens forms the entire diffusion member 120 in an 8X8 array. At a separation distance of 2.3 [mm], when the array is composed of 50 [µm] size micro lenses, 99% energy or more is incident on 28X28 micro lenses out of 48X48 micro lenses, whereas when the array is composed of 300 [µm] size micro lenses, 99% energy or more is incident on 8X8 micro lenses out of 8X8 micro lenses.

Since the amount of energy per one micro lens decreases as the number of micro lenses to which 99% or more of the total energy outputted by the light source is incident increases, it can be seen that the smaller the separation distance and the micro lens size are, the better. However, the separation distance cannot be increased without limitation due to the size of a terminal in which the distance measuring camera apparatus 1000 is installed. Also, the size of the micro lens cannot be reduced without limitation in consideration of manufacturing cost and the like. Therefore, it is necessary to efficiently set the first region and the second region in consideration of the separation distance between the light source 110 and the diffusion member 120.

FIG. 7 is a diagram for explaining a divergence angle of a light emitting device according to an embodiment of the present invention.

Referring to FIGS. 6 and 7, first, the light source 110 and the diffusion member 120 are disposed to be spaced apart by a predetermined distance D. In addition, the light emitting device outputs light at a predetermined angle θ. When an imaginary normal line perpendicular to the substrate 111 is connected from the center of the light emitting device 112, the angle θ/2 between the imaginary normal line and the light is half of the divergence angle θ of the light outputted from the light emitting device 112. The plurality of light emitting devices 112 may all have the same standard, and the divergence angle θ at which the plurality of light emitting devices 112 output light may be the same.

As described above, the area of the second region may be set based on the divergence angle of the light source 110. That is, the second region may be determined depending on how the divergence angle is set.

For example, as shown in FIG. 5, the light emitting device may emit certain energy from -20 degrees to 20 degrees with respect to the optical axis. However, it can be seen that the amount of energy is almost zero at -15 degrees or less and +15 degrees or more. That is, most of the energy exists within a certain angle with respect to the optical axis of the light emitting device. Therefore, it is inefficient to set all angles other than zero energy as the divergence angle of the light emitting device, and it is efficient to set the angle at which energy of a certain amount or more is emitted as the divergence angle of the light emitting device. Accordingly, in the present invention, the divergence angle of the light source 110 is set to an angle at which a light intensity of 1/e² times the maximum light intensity of the light source 110 is outputted. In this case, 99% of the luminous flux outputted from the light source 110 may be outputted within the divergence angle of the light source 110. In the present invention, up to a light intensity of 1/e² times the maximum light intensity of the light source 110 is defined as effective light, and up to the corresponding angle is defined as a divergence angle.

Meanwhile, the divergence angle may vary depending on the magnitude of a current supplied to the light emitting device. The light source receives a current within a predetermined range (between a first current level and a second current level), and the greater the power supplied, the greater the divergence angle may be. FIG. 5 shows that the light source 110 is supplied with a current in the range of 1.74 [A] to 5.23 [A]. It can be seen that the width of a relative light intensity graph in case where 5.23 [A] is supplied is greater than the width of a relative light intensity graph in case where 3.49 [A] is supplied. It can be seen that the width of a relative light intensity graph in case where 3.49 [A] is supplied is greater than the width of a relative light intensity graph in case where 1.74 [A] is supplied. Accordingly, the divergence angle is set based on the light output when the maximum current is supplied to the light source 110. That is, when the light source 110 receives a current between the first current level and the second current level, the divergence angle of the light source is set based on the light outputted from the light source when the current of the second current level is inputted.

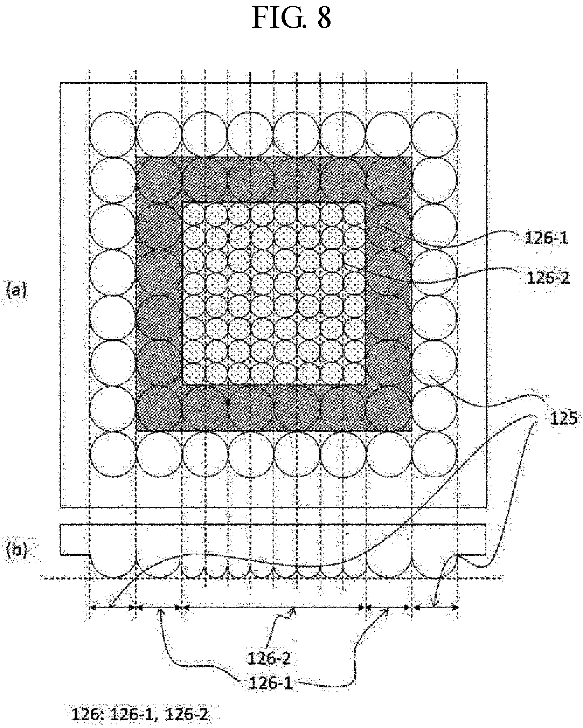

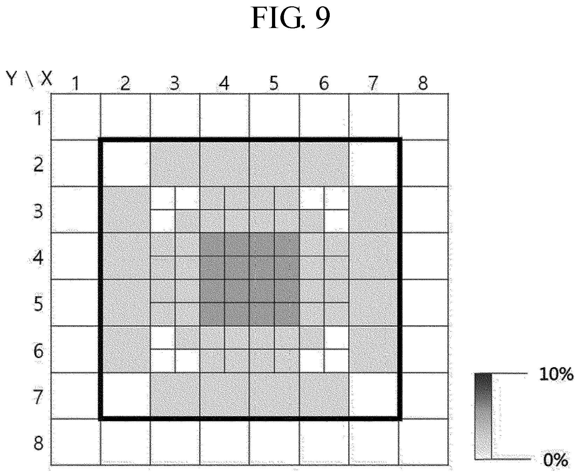

The diffusion member 120 according to the first embodiment of the present invention will be described through FIGS. 8 and 9.

FIG. 8 is a diagram illustrating a diffusion member according to an embodiment of the present invention.

In FIG. 8, (a) is a plan view of the diffusion member 120 according to an embodiment, and (b) is a cross-sectional view of the diffusion member 120 according to an embodiment.

The diffusion member 120 according to the embodiment of the present invention includes a first region 125 and a second region 126, wherein the second region 126 includes two sub-regions 126-1 and 126-2. A plurality of sub-regions includes a first sub-region 126-1 and a second sub-region 126-2.

The first sub-region 126-1 is disposed adjacent to the first region 125. In addition, the second sub-region 126-2 is disposed to be spaced apart from the first sub-region 125 and surrounded by the first sub-region 126-1. According to an embodiment, the diameter of the micro lens disposed in at least one of the plurality of sub-regions may be equal to the diameter of a micro lens disposed in the first region 125. As shown in FIG. 7, since the second region 126 includes the first sub-region 126-1 and the second sub-region 126-2, the diameter of a micro lens disposed in the first sub-region 126-1 may be equal to that of a micro lens disposed in the first region 125, and the diameter of a micro lens disposed in the second sub-region 126-2 is smaller than that of a micro lens disposed in the first region 125. For example, the diameter of a micro lens disposed in the first sub-region 126-1 may be 300 [µm], and the diameter of a micro lens disposed in the second sub-region 126-2 may be 150 [µm]. Meanwhile, the height formed by a micro lens disposed in the first sub-region 126-1 may be equal to the height formed by a micro lens disposed in the second sub-region 126-2.

FIG. 9 is a diagram illustrating an example of the concentration of luminous flux according to FIG. 8.

Referring to FIG. 9, in case of the micro lens disposed in the first sub-region, energy is received within 0.5% of the total energy incident from the light source 110. In case of the second sub-region, the number of micro lenses to which energy of 2.5% or more and less than 9.0% is inputted is 16, which corresponds to 1/16 of the entire area of the micro lenses. This is 1/6 of the area of micro lens to which 2.5% energy or more is inputted as shown in FIG. 3, indicating that safety is very high.

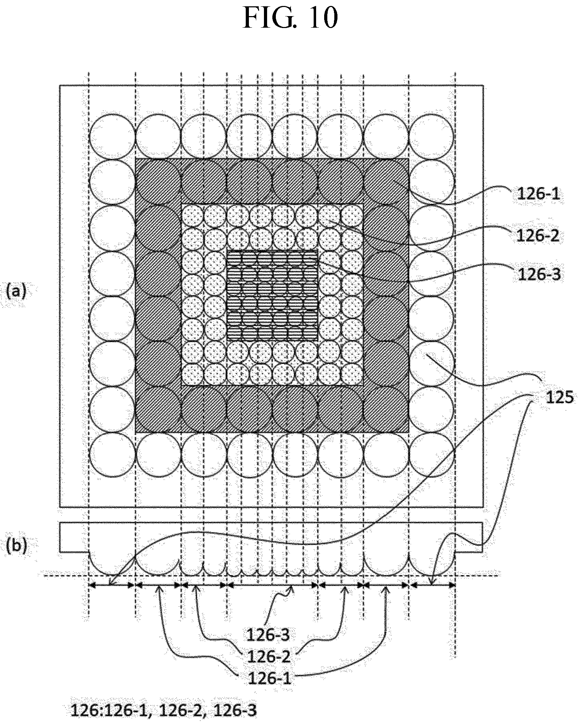

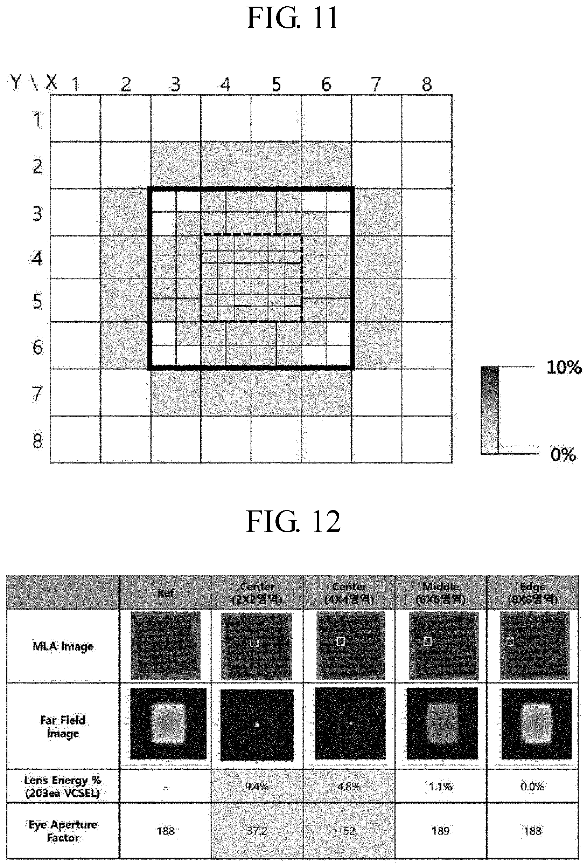

The diffusion member 120 according to the first embodiment of the present invention will be described with reference to FIGS. 10 and 11.

FIG. 10 is a diagram illustrating a diffusion member according to an embodiment of the present invention.

In FIG. 10, (a) is a plan view of the diffusion member 120 according to an embodiment, and (b) is a cross-sectional view of the diffusion member 120 according to an embodiment.

The diffusion member 120 according to the embodiment of the present invention includes a first region 125 and a second region 126, wherein the second region 126 may include three sub-regions 126-1, 126-2, and 126-3. A plurality of sub-regions may include a first sub-region 126-1, a second sub-region 126-2, and a third sub-region 126-3. The third sub-region 126-3 includes the center of the diffusion member 120, is spaced apart from the first sub-region 126-1, and is surrounded by the second sub-region 126-2. That is, in the outer direction from the center of the diffusion member 120, the third sub-region 126-3, the second sub-region 126-2, the first sub-region 126-1, and the first region 125 may be arranged sequentially. The diameter of a micro lens disposed in the third sub-region 126-3 may be smaller than that of a micro lens disposed in the second sub-region 126-2. Therefore, the diameter of a micro lens disposed in the first region 125 may be equal to that of a micro lens disposed in the first sub-region 126-1, the diameter of a micro lens disposed in the second sub-region 126-2 may be smaller than that of a micro lens disposed in the first sub-region 126-1, and the diameter of a micro lenses disposed in the third sub-region 126-3 may be smaller than that of a micro lens disposed in the second sub-region 126-2. For example, the diameter of a micro lens disposed in the first sub-region 126-1 may be 300 [µm], the diameter of a micro lens disposed in the second sub-region 126-2 may be 150 [µm], and the diameter of a micro lens disposed in the third sub-region 126-3 may be 100 [µm]. Meanwhile, micro lenses disposed in the first to third sub-regions 126-1 to 126-3 may have the same height.

FIG. 11 is a diagram illustrating an example of the concentration of luminous flux according to an embodiment of the present invention.

Referring to FIG. 11, the micro lenses disposed in the first to third sub-regions 126-1 to 126-3 receive energy within 0.5% of the total energy incident from the light source 110. Accordingly, all micro lenses included in the diffusion member 120 receive energy within 0.5%. As a result, even if some of the micro lenses are damaged, the light outputted from the light source 110 is evenly incident on all the micro lenses, so that damage to the body by the light can be prevented.

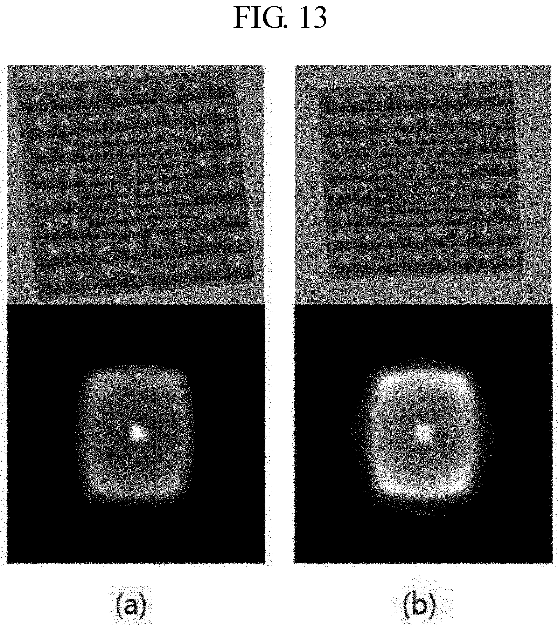

A simulation result according to an embodiment of the present invention will be described with reference to FIGS. 12 and 13.

FIG. 12 is a diagram illustrating a simulation result in a diffusion member configured using only micro lenses with a size of 300 [µm].

Referring to FIG. 12, if there is no damage to a micro lens (Ref) or if a micro lens is damaged in the outermost region (Edge) or in a region adj acent to the outermost (Middle), the energy emitted from a damaged part of the micro lens is 1.1% or less and the eye aperture factor is 179 or more. This value is higher than 179, which is the eye safety standard, and may not cause damage even if the corresponding light is irradiated to the human eye. However, if a micro lens is damaged in regions (Center 2X2, 4X4) adjacent to the center of the diffusion member 120, the energy emitted from a damaged part of the micro lens is 4.8% or more and the eye aperture factor is 179 or less. In particular, in both cases, the value is 100 or more lower than the eye aperture factor standard value of 179, and this indicates that when the corresponding light is irradiated to the human eye, it can lead to blindness.

FIG. 13 is a diagram illustrating a simulation result in a diffusion member according to an embodiment of the present invention.

In FIG. 13, (a) is a far-field according to the first embodiment, and (b) is a far-field according to the second embodiment. In both cases, a micro lens is damaged in a region adjacent to the center of the diffusion member 120. In case of (a) of FIG. 13, the eye aperture factor is 125.2, and 4.55 [mW] based on 570 [mW], which is the total energy of the light source 110, is outputted from a damaged part. In case of (b) of FIG. 13, the eye aperture factor is 194.8, and 2.93 [mW] based on 570 [mW], which is the total energy of the light source 110, is outputted from a damaged part. In case of the first embodiment, although the eye aperture factor value is lower than the reference value of 174, a difference is merely 50 or less, so that serious injuries such as blindness can be prevented. In case of the second embodiment, the eye aperture factor value is higher than the reference value of 174, indicating that there is no body damage due to the damaged micro lens.

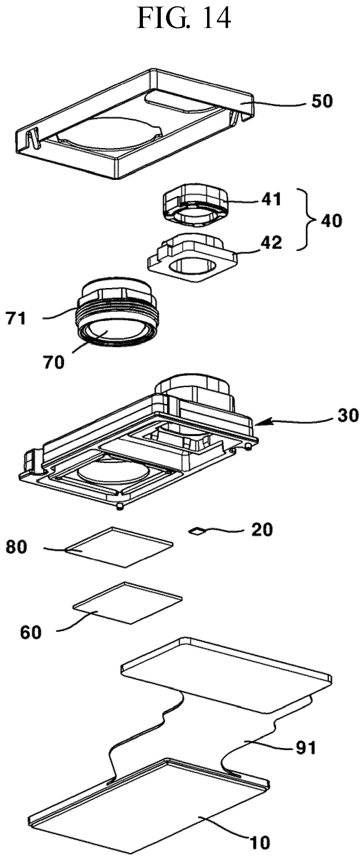

FIG. 14 is an exploded diagram of a distance measuring camera apparatus according to an embodiment of the present invention.

The distance measuring camera apparatus may include a light emitter and a light receiver. However, because a substrate 10, a holder 30, and a shield can 50 are integrally formed and used in common for the light emitter and the light receiver, it may be difficult to distinguish the light emitter and the light receiver. In this case, each of the above components may be understood as a component of each of the light emitter and the light receiver. Alternatively, as in a modified example, common components such as the substrate 10, the holder 30, and the shield can 50 may be provided separately for the light emitter and the light receiver.

The light emitter may include the substrate 10, a light source 20, the holder 30, a diffusion member 41, a diffuser ring 42, and the shield can 50. The light receiver may include the substrate 10, a sensor 60, a filter 80, the holder 30, a lens 70, a barrel 71, and the shield can 50.

The substrate 10 may include a printed circuit board (PCB). The substrate 10 may be connected to a connector through a FPCB 91. The substrate 10 and the FPCB 91 may be formed of a rigid flexible PCB (RFPCB). The light source 20 and the sensor 60 may be disposed on the substrate 10. The substrate 10 may be disposed under the holder 30. The substrate 10 may include a terminal. The terminal of the substrate 10 may be coupled to a coupling portion of the shield can 50. The terminal of the substrate 10 may include a plurality of terminals. The terminal of the substrate 10 may include two terminals.

The light source 20 may be disposed on the substrate 10. The light source 20 may be disposed in contact with the substrate 10. The light source 20 may be disposed above the substrate 10. The light source 20 may be disposed in the substrate 10. The light source 20 may correspond to the light source 110 described above.

The holder 30 may be disposed on the substrate 10. The holder 30 may be disposed in contact with the substrate 10. The holder 30 may be disposed above the substrate 10. The holder 30 may be disposed in the substrate 10. The holder 30 may be fixed to the substrate 10 by an adhesive. The holder 30 may accommodate the light source 20, a diffuser module 40, the sensor 60, and the filter 80 therein. The holder 30 may be a plastic injection molded product. The holder 30 may be formed by injection.

The diffuser module 40 may include the diffusion member 41 and the diffuser ring 42. The diffuser module 40 may be integrally formed as in the modified example, but in this embodiment, the diffusion member 41 and the diffuser ring 42 may be separately manufactured to increase moldability during injection molding. The diffusion member 41 and the diffuser ring 42 may be separated from each other.

The diffusion member 41 may be a diffuser lens. The diffusion member 41 may correspond to the diffusion member 120 described above. The diffusion member 41 may be disposed in the holder 30. The diffusion member 41 may be coupled to the holder 30. The diffusion member 41 may be fixed to the holder 30. The diffusion member 41 may be disposed on an optical path of light emitted from the light source 20. The diffusion member 41 may be disposed on the light source 20. The diffusion member 41 may be disposed above the light source 20. The diffusion member 41 may be a plastic injection molded product. The diffusion member 41 may be formed by plastic injection. The height of an upper end of the diffusion member 41 may correspond to the height of an upper end of the lens 70. The diffusion member 41 may be inserted vertically inserted in an upward direction and coupled to the holder 30. In this case, the upward direction may be a direction from a lower portion of the holder 30 toward an upper portion of the holder 30. A portion of the diffusion member 41 may overlap with the holder 30 in the upward direction.

The diffuser ring 42 may be disposed in the holder 30. The diffuser ring 42 may be fixed to the holder 30. The diffuser ring 42 may be coupled to the holder 30. The diffuser ring 42 may be disposed under the diffusion member 41. The diffuser ring 42 may support the diffusion member 41. The diffuser ring 42 may be in contact with the diffusion member 41. The diffuser ring 42 may be a plastic injection molded product. The diffuser ring 42 may be formed by plastic injection.

The shield can 50 may cover a body of the holder 30. The shield can 50 may include a cover. The shield can 50 may include a cover can. The shield can 50 may be a non-magnetic material. The shield can 50 may be formed of a metal material. The shield can 50 may be formed of a metal plate. The shield can 50 may be electrically connected to the substrate 10. The shield can 50 may be connected to the substrate 10 through a solder ball. Through this, the shield can 50 may be grounded. The shield can 50 may block electromagnetic interference (EMI). In this case, the shield can 50 may be referred to as an 'EMI shield can'. In this embodiment, the shield can 50 may block EMI because EMI may increase as a high voltage is used inside the optical device.

The sensor 60 may be disposed on the substrate 10. The sensor 60 may be disposed on the other side of a partition wall of the holder 30 on the substrate 10. That is, the sensor 60 may be disposed on the opposite side of the light source 20 with respect to the partition wall of the holder 30. The sensor 60 may detect infrared rays. The sensor 60 may detect light of a specific wavelength among infrared rays. The sensor 60 may detect light passing through the filter 80. The sensor 60 may detect light in a wavelength band of the light source 20. Through this, the sensor 60 detects the light emitted from the light source 20 and reflected on a subject and thereby sense 3D image information of the subject. An effective sensing area of the sensor 60 is disposed to correspond to the diffusion member 41, but the sensor 60 may be disposed to be biased toward the partition wall as a whole. A circuit pattern of the sensor 60 may be disposed on a portion of the sensor 60 that is biased toward the partition wall.

The lens 70 may be fixed in the barrel 71. The lens 70 may be a plastic injection molded product. The lens 70 may be formed by plastic injection. The lens 70 may include a plurality of lenses.

The filter 80 may be disposed between the lens 70 and the sensor 60. The filter 80 may be a band pass filter that passes light of a specific wavelength band. The filter 80 may pass infrared rays. The filter 80 may pass light of a specific wavelength among infrared rays. The filter 80 may pass light of a wavelength band of light emitted by the light source 20. The filter 80 may block visible light. The filter 80 may be coupled to the holder 30. A recess having a size corresponding to that of the filter 80 may be formed in the holder 30, and the filter 80 may be inserted into the recess and fixed with an adhesive. To inject the adhesive between the filter 80 and the holder 30, an adhesive injection groove may be formed together in the recess of the holder 30. The filter 80 may be disposed at a position lower than the position of the diffuser ring 42.

## Claims

1. A distance measuring camera apparatus (1000) comprising:
a light emitter (100); and
a light receiver (200) including an image sensor,
the light emitter (100) comprising:
a light source (110) including a light emitting device; and
a diffusion member (120) disposed on the light source (110) and including a plurality of micro lenses (122),
the diffusion member (120) having a first region (125) and a second region (126),
wherein the first region (125) is disposed to surround the second region (126), and
the second region (126) is disposed such that a center thereof overlaps with the light emitter (100) in an optical axis direction,
**characterized in that**
a diameter of the micro lens located in the second region (126) is smaller than a diameter of the micro lens located in the first region (125),
the second region (126) includes a plurality of sub-regions,
the plurality of sub-regions includes:
a first sub-region (126-1) adjacent to the first region (125) and including a micro lens having a size of a first diameter, and
a second sub-region (126-2) surrounded by the first sub-region (126-1) and including a micro lens having a size of a second diameter smaller than the first diameter,
and
that a minimum area of the second region (126) is set using following equation: $E = 2 \left(D\times tan\left(\frac{θ}{2}\right)\right) + t$ where E denotes a horizontal length or a vertical length of the second region (126), D denotes a separation distance between the diffusion member (120) and the light source (110), θ denotes a divergence angle of the light source (110), and t denotes a maximum separation distance between centers of light emitting devices disposed in a same row or column among a plurality of light emitting devices included in the light source (110),
wherein the light source (110) receives a current between a first current level and a second current level,
wherein the divergence angle of the light source (110) is set based on an output of light outputted by the light source (110) when the current of the second current level is inputted, and
wherein the divergence angle of the light source (110) is an angle at which a light intensity of 1/e² times a maximum light intensity of the light source (110) is outputted.

2. The distance measuring camera apparatus of claim 1, wherein the first diameter is equal to a diameter of the micro lens disposed in the first region (125).

3. The distance measuring camera apparatus of claim 1, wherein the plurality of sub-regions further includes:
a third sub-region (126-3) including a center of the diffusion member (120), surrounded by the second sub-region (126-2), and including a micro lens having a third diameter smaller than the second diameter.

4. The distance measuring camera apparatus of claim 1, wherein the second region (126) is set depending on a separation distance between the diffusion member (120) and the light source (110) such that an area of the second region (126) is discretely increased as the separation distance increases.

5. The distance measuring camera apparatus of claim 1, wherein a diameter of the micro lens located in the second region (126) is 150 µm or less.

6. A distance measuring camera apparatus comprising:
a light emitter (100); and
a light receiver (200) including an image sensor,
the light emitter (100) comprising:
a light source (110) including a light emitting device (112); and
a diffusion member (120) disposed on the light source (110) and including a plurality of micro lenses (122),
the diffusion member (120) having a first region (125) and a second region (126),
wherein the first region (125) is disposed to surround the second region (126),
the second region (126) is disposed such that a center thereof overlaps with the light emitter (100) in an optical axis direction,
**characterized in that**
a diameter of the micro lens located in the first region (125) is 150 µm or less, and that a minimum area of the second region (126) is set using following equation: $E = 2 \left(D\times tan\left(\frac{θ}{2}\right)\right) + t$
where E denotes a horizontal length or a vertical length of the second region (126), D denotes a separation distance between the diffusion member (120) and the light source (110), θ denotes a divergence angle of the light source (110), and t denotes a maximum separation distance between centers of light emitting devices disposed in a same row or column among a plurality of light emitting devices included in the light source (110),
wherein the light source (110) receives a current between a first current level and a second current level,
wherein the divergence angle of the light source (110) is set based on an output of light outputted by the light source (110) when the current of the second current level is inputted, and
wherein the divergence angle of the light source (110) is an angle at which a light intensity of 1/e² times a maximum light intensity of the light source (110) is outputted.

## Patentansprüche

1. Abstandsmesskameraeinrichtung (1000), umfassend:
einen Lichtemitter (100); und
einen Lichtempfänger (200), der einen Bildsensor einschließt,
der Lichtemitter (100) umfassend:
eine Lichtquelle (110), die eine lichtemittierende Vorrichtung einschließt; und
ein Diffusionselement (120), das an der Lichtquelle (110) angeordnet ist und eine Vielzahl von Mikrolinsen (122) einschließt,
wobei das Diffusionselement (120) einen ersten Bereich (125) und einen zweiten Bereich (126) aufweist,
wobei der erste Bereich (125) angeordnet ist, um den zweiten Bereich (126) zu umgeben, und
der zweite Bereich (126) derart angeordnet ist, dass sich eine Mitte davon in einer Richtung einer optischen Achse mit dem Lichtemitter (100) überlappt,
**dadurch gekennzeichnet, dass**
ein Durchmesser der Mikrolinse, die sich in dem zweiten Bereich (126) befindet, kleiner als ein Durchmesser der Mikrolinse, die sich in dem ersten Bereich (125) befindet, ist,
der zweite Bereich (126) eine Vielzahl von Teilbereichen einschließt,
die Vielzahl von Teilbereichen einschließt:
einen ersten Teilbereich (126-1), der an den ersten Bereich (125) angrenzt und eine Mikrolinse, die eine Größe eines ersten Durchmessers aufweist, einschließt, und
einen zweiten Teilbereich (126-2), der von dem ersten Teilbereich (126-1) umgeben ist und eine Mikrolinse einschließt, die eine Größe eines zweiten Durchmessers, der kleiner als der erste Durchmesser ist, aufweist,
und
dass eine Mindestfläche des zweiten Bereichs (126) unter Verwendung folgender Gleichung eingestellt wird: $E = 2 \left(D\times tan\left(\frac{θ}{2}\right)\right) + t$
wobei E eine horizontale Länge oder eine vertikale Länge des zweiten Bereichs (126) bezeichnet, D einen Trennungsabstand zwischen dem Diffusionselement (120) und der Lichtquelle (110) bezeichnet, θ einen Divergenzwinkel der Lichtquelle (110) bezeichnet und t einen maximalen Trennungsabstand zwischen Mitten von lichtemittierenden Vorrichtungen bezeichnet, die in einer gleichen Reihe oder Spalte unter einer Vielzahl von lichtemittierenden Vorrichtungen, die in der Lichtquelle (110) eingeschlossen sind, angeordnet sind,
wobei die Lichtquelle (110) einen Strom zwischen einem ersten Strompegel und einem zweiten Strompegel empfängt,
wobei der Divergenzwinkel der Lichtquelle (110) basierend auf einer Ausgabe von Licht eingestellt wird, das von der Lichtquelle (110) ausgegeben wird, wenn der Strom des zweiten Strompegels eingegeben wird, und
wobei der Divergenzwinkel der Lichtquelle (110) ein Winkel ist, bei dem eine Lichtintensität eines 1/e²-Fachen einer maximalen Lichtintensität der Lichtquelle (110) ausgegeben wird.

2. Abstandsmesskameraeinrichtung nach Anspruch 1, wobei der erste Durchmesser gleich einem Durchmesser der Mikrolinse ist, die in dem ersten Bereich (125) angeordnet ist.

3. Abstandsmesskameraeinrichtung nach Anspruch 1, wobei die Vielzahl von Teilbereichen ferner einschließt:
einen dritten Teilbereich (126-3), der eine Mitte des Diffusionselements (120) einschließt, von dem zweiten Teilbereich (126-2) umgeben ist und eine Mikrolinse einschließt, die einen dritten Durchmesser, der kleiner als der zweite Durchmesser ist, aufweist.

4. Abstandsmesskameravorrichtung nach Anspruch 1, wobei der zweite Bereich (126) in Abhängigkeit von einem Trennungsabstand zwischen dem Diffusionselement (120) und der Lichtquelle (110) derart eingestellt wird, dass eine Fläche des zweiten Bereichs (126) mit sich vergrößerndem Trennungsabstand diskret vergrößert wird.

5. Abstandsmesskameraeinrichtung nach Anspruch 1, wobei ein Durchmesser der Mikrolinse, die sich in dem zweiten Bereich (126) befindet, 150 µm oder weniger beträgt.

6. Abstandsmesskameraeinrichtung, umfassend:
einen Lichtemitter (100); und
einen Lichtempfänger (200), der einen Bildsensor einschließt,
der Lichtemitter (100) umfassend:
eine Lichtquelle (110), die eine lichtemittierende Vorrichtung (112) einschließt; und
ein Diffusionselement (120), das an der Lichtquelle (110) angeordnet ist und eine Vielzahl von Mikrolinsen (122) einschließt,
wobei das Diffusionselement (120) einen ersten Bereich (125) und einen zweiten Bereich (126) aufweist,
wobei der erste Bereich (125) angeordnet ist, um den zweiten Bereich (126) zu umgeben,
wobei der zweite Bereich (126) derart angeordnet ist, dass sich eine Mitte davon in einer Richtung der optischen Achse mit dem Lichtemitter (100) überlappt,
**dadurch gekennzeichnet, dass**
ein Durchmesser der Mikrolinse, die sich in dem ersten Bereich (125) befindet, 150 µm oder weniger beträgt, und dass eine Mindestfläche des zweiten Bereichs (126) unter Verwendung der folgenden Gleichung eingestellt wird: $E = 2 \left(D\times tan\left(\frac{θ}{2}\right)\right) + t$
wobei E eine horizontale Länge oder eine vertikale Länge des zweiten Bereichs (126) bezeichnet, D einen Trennungsabstand zwischen dem Diffusionselement (120) und der Lichtquelle (110) bezeichnet, θ einen Divergenzwinkel der Lichtquelle (110) bezeichnet und t einen maximalen Trennungsabstand zwischen Mitten von lichtemittierenden Vorrichtungen bezeichnet, die in einer gleichen Reihe oder Spalte unter einer Vielzahl von lichtemittierenden Vorrichtungen, die in der Lichtquelle (110) eingeschlossen sind, angeordnet sind,
wobei die Lichtquelle (110) einen Strom zwischen einem ersten Strompegel und einem zweiten Strompegel empfängt,
wobei der Divergenzwinkel der Lichtquelle (110) basierend auf einer Ausgabe von Licht eingestellt wird, das von der Lichtquelle (110) ausgegeben wird, wenn der Strom des zweiten Strompegels eingegeben wird, und
wobei der Divergenzwinkel der Lichtquelle (110) ein Winkel ist, bei dem eine Lichtintensität des 1/e²-Fachen einer maximalen Lichtintensität der Lichtquelle (110) ausgegeben wird.

## Revendications

1. Un appareil de caméra de mesure de distance (1000) comprenant :
un émetteur de lumière (100) ; et
un récepteur de lumière (200) comprenant un capteur d'image,
l'émetteur de lumière (100) comprenant :
une source lumineuse (110) comprenant un dispositif émetteur de lumière ; et
un élément de diffusion (120) disposé sur la source lumineuse (110) et comprenant une pluralité de micro-lentilles (122),
l'élément de diffusion (120) ayant une première région (125) et une deuxième région (126),
où la première région (125) est disposée de façon à entourer la deuxième région (126), et la deuxième région (126) est disposée de telle sorte que son centre se superpose à l'émetteur de lumière (100) dans la direction de l'axe optique,
**caractérisé en ce que**
le diamètre de la micro-lentille située dans la deuxième région (126) est inférieur au diamètre de la micro-lentille située dans la première région (125),
la deuxième région (126) comprend une pluralité de sous-régions,
la pluralité de sous-régions comprend :
une première sous-région (126-1) adjacente à la première région (125) et comprenant une micro-lentille d'un premier diamètre, et
une deuxième sous-région (126-2) entourée par la première sous-région (126-1) et comprenant une micro-lentille d'un deuxième diamètre inférieur au premier diamètre,
et
qu'une aire minimale de la deuxième région (126) est définie à l'aide de l'équation suivante : $\left.E=2\left(D\times tan\left(\frac{θ}{2}\right)\right)+t\right|$
où E désigne une longueur horizontale ou une longueur verticale de la deuxième région (126), D désigne une distance de séparation entre l'élément de diffusion (120) et la source lumineuse (110), 8 désigne un angle de divergence de la source lumineuse (110), et t désigne une distance de séparation maximale entre les centres des dispositifs émetteurs de lumière disposés sur une même rangée ou colonne parmi une pluralité de dispositifs émetteurs de lumière inclus dans la source lumineuse (110),
où la source lumineuse (110) reçoit un courant compris entre un premier niveau de courant et un deuxième niveau de courant,
où l'angle de divergence de la source lumineuse (110) est réglé en fonction du flux lumineux émis par la source lumineuse (110) lorsque le courant correspondant au deuxième niveau de courant est appliqué, et
où l'angle de divergence de la source lumineuse (110) est l'angle pour lequel une intensité lumineuse de 1/e² fois l'intensité lumineuse maximale de la source lumineuse (110) est émise.

2. L'appareil de caméra de mesure de distance selon la revendication 1, dans lequel le premier diamètre est égal au diamètre de la micro-lentille disposée dans la première région (125).

3. L'appareil de caméra de mesure de distance selon la revendication 1, dans lequel la pluralité de sous-régions comprend en outre :
une troisième sous-région (126-3) comprenant le centre de l'élément de diffusion (120), entourée par la deuxième sous-région (126-2), et comprenant une micro-lentille dont le troisième diamètre est inférieur au deuxième diamètre.

4. L'appareil de caméra de mesure de distance selon la revendication 1, dans lequel la deuxième région (126) est définie en fonction de la distance de séparation entre l'élément de diffusion (120) et la source lumineuse (110) de sorte que la surface de la deuxième région (126) augmente par paliers à mesure que la distance de séparation augmente.

5. L'appareil de caméra de mesure de distance selon la revendication 1, dans lequel le diamètre de la micro-lentille située dans la deuxième région (126) est de 150 µm ou moins.

6. Un appareil de caméra de mesure de distance comprenant :
un émetteur de lumière (100) ; et
un récepteur de lumière (200) comprenant un capteur d'image,
l'émetteur de lumière (100) comprenant :
une source lumineuse (110) comprenant un dispositif émetteur de lumière (112) ; et
un élément de diffusion (120) disposé sur la source lumineuse (110) et comprenant une pluralité de micro-lentilles (122),
l'élément de diffusion (120) ayant une première région (125) et une deuxième région (126),
dans laquelle la première région (125) est disposée de manière à entourer la deuxième région (126),
la deuxième région (126) est disposée de sorte que son centre se superpose à l'émetteur de lumière (100) dans la direction de l'axe optique,
**caractérisé en ce que**
le diamètre de la micro-lentille située dans la première région (125) est de 150 µm ou moins, et qu'une aire minimale de la deuxième région (126) est fixée à l'aide de l'équation suivante : $\left.E=2\left(D\times tan\left(\frac{θ}{2}\right)\right)+t\right|$
où E désigne une longueur horizontale ou une longueur verticale de la deuxième région (126), D désigne une distance de séparation entre l'élément de diffusion (120) et la source lumineuse (110), 8 désigne un angle de divergence de la source lumineuse (110), et t désigne une distance de séparation maximale entre les centres des dispositifs émetteurs de lumière disposés dans une même rangée ou colonne parmi une pluralité de dispositifs émetteurs de lumière inclus dans la source lumineuse (110),
dans laquelle la source lumineuse (110) reçoit un courant compris entre un premier niveau de courant et un deuxième niveau de courant,
dans laquelle l'angle de divergence de la source lumineuse (110) est réglé en fonction du flux lumineux émis par la source lumineuse (110) lorsque le courant correspondant au deuxième niveau de courant est appliqué, et
dans laquelle l'angle de divergence de la source lumineuse (110) est un angle auquel une intensité lumineuse égale à 1/e² fois l'intensité lumineuse maximale de la source lumineuse (110) est émise.
